# FASCICULE DE BREVET EUROPEEN

(11) **EP 2 886 516 B1**
(45) Date de publication et mention de la délivrance du brevet: **13.07.2016**
(21) Numéro de dépôt: 14199438.4
(22) Date de dépôt: 19.12.2014
(51) Int. Cl.: C01G 43/025, C01G 43/06, C01B 7/19, B01J 19/00, G21C 1/00

(54) **Procédé pour la production de difluorure d'uranyle et d'acide fluorhydrique anhydre**
Verfahren für die Herstellung von Uranyldifluorid und wasserfreier Fluorwasserstoffsäure
Method for producing uranyl difluoride and anhydrous hydrofluoric acid

(30) Priorité: 20.12.2013 FR 1363218
(43) Date de publication de la demande: 24.06.2015
(73) Titulaire: Commissariat à l'Energie Atomique et aux Energies Alternatives, 75015 Paris (FR)
(72) Inventeur: Borgard, Jean-Marc, 91400 Orsay (FR)
(74) Mandataire: Dennemeyer & Associates S.A.

(56) Documents cités:
- WO-A2-99/36352
- US-A- 4 053 506
- US-A- 5 346 684

## Description

### DOMAINE TECHNIQUE

La présente invention appartient au domaine général des méthodes de production d'un combustible nucléaire comprenant du dioxyde d'uranium UO₂.

L'invention concerne plus particulièrement une méthode de production conjointe d'acide fluorhydrique HF et de difluorure d'uranyle UO₂F₂, produit intermédiaire dans la fabrication du dioxyde d'uranium UO₂.

### ARRIERE-PLAN TECHNIQUE

Depuis de nombreuses années, le dioxyde d'uranium UO₂ peut être obtenu selon le procédé dit de « voie sèche » qui consiste en la succession de deux réactions :
- l'hexafluorure d'uranium UF₆ et de l'eau en excès molaire réagissent en phase gazeuse selon une réaction d'hydrolyse afin de former une poudre de difluorure d'uranyle UO₂F2 et d'acide fluorhydrique HF ; puis
- le difluorure d'uranyle UO₂F₂ subit une pyrohydrolyse en présence d'eau et d'hydrogène H₂ afin d'obtenir le dioxyde d'uranium UO₂ ou l'octaoxyde de triuranium U₃O₈.

À l'issue de la première réaction d'hydrolyse, du difluorure d'uranyle UO₂F₂ est obtenu, mais également de l'acide fluorhydrique HF en tant que coproduit.

L'acide fluorhydrique HF donne accès à des espèces chimiques valorisables industriellement, telles que le fluorure d'aluminium, ou le fluor obtenu après électrolyse qui peut être utilisé à son tour pour produire de l'hexafluorure d'uranium UF₆.

Toutefois, cette valorisation nécessite pour la majorité des applications que l'acide fluorhydrique HF soit anhydre. La forme anhydre de l'acide fluorhydrique HF est donc celle qui a la plus grande valeur marchande et cette forme est la plus recherchée.

Or, la réaction d'hydrolyse de l'hexafluorure d'uranium UF₆ nécessite la présence d'un excès d'eau. Elle aboutit donc à un mélange gazeux d'acide fluorhydrique HF et d'eau.

Pour valoriser néanmoins ce mélange, il a été proposé de le distiller afin d'obtenir de l'acide fluorhydrique HF quasiment anhydre.

La distillation simple de ce mélange ne produit toutefois pas de l'acide fluorhydrique HF sous forme totalement anhydre, à cause de la présence d'un azéotrope à environ 38 % massique d'acide fluorhydrique HF et 62 % d'eau. En pratique, seule environ la moitié de l'acide fluorhydrique HF peut être récupérée sous forme anhydre en dépensant une énergie importante. L'autre moitié est un mélange de composition proche de l'azéotrope dont la valeur marchande est plus faible que celle de la forme anhydre.

Plusieurs tentatives ont dès lors été menées depuis les années 1950 en vue de produire du difluorure d'uranyle UO₂F₂, tout en obtenant de l'acide fluorhydrique HF sous forme anhydre à l'issue de la réaction d'hydrolyse précédemment mentionnée.

Le document US 5,346,684 A décrit ainsi un procédé qui vise à récupérer de l'acide fluorhydrique HF sous forme anhydre à l'issue de la réaction d'hydrolyse de l'hexafluorure d'uranium UF₆.

Selon ce procédé, dans un premier réacteur, l'hexafluorure d'uranium UF₆ réagit en présence d'eau afin d'obtenir du difluorure d'uranyle UO₂F₂ sous forme solide et un premier mélange gazeux comprenant de l'eau et de l'acide fluorhydrique HF, selon la réaction d'hydrolyse suivante :

(1) UF₆ + 2 H₂O -> UO₂F2 + 4 HF

Les phases solide et gazeuse ainsi obtenues sont extraites du premier réacteur pour être traitées respectivement dans un second réacteur et dans une unité de séparation.

Dans le second réacteur, le difluorure d'uranyle UO₂F₂ réagit avec de l'eau afin de produire de l'octaoxyde de triuranium U₃O₈ sous forme solide et un second mélange gazeux comprenant de l'oxygène et de l'acide fluorhydrique HF, selon la réaction de pyrohydrolyse suivante :

(2) 3 UO₂F₂ + 3 H₂O → U₃O8 + 1/2 O₂ + 6 HF

Dans l'unité de séparation, le premier mélange gazeux et le deuxième mélange gazeux sont ensuite réunis afin de former un troisième mélange gazeux.

Cette unité consiste généralement en une colonne de distillation conventionnelle. Elle sépare le troisième mélange gazeux en un premier effluent gazeux contenant de l'oxygène et de l'acide fluorhydrique HF contenant peu d'eau, et en un deuxième effluent gazeux contenant un mélange azéotropique d'eau et d'acide fluorhydrique HF.

Le premier effluent gazeux est ensuite traité dans un condenseur afin de séparer l'oxygène de l'acide fluorhydrique HF substantiellement dépourvu d'eau.

Le procédé décrit dans le document US 5,346,684 A présente néanmoins plusieurs inconvénients.

Ainsi, l'oxygène obtenu en tant que coproduit selon ce procédé accentue fortement les problèmes de corrosion dans les différentes unités utilisées. Il nécessite de plus une étape supplémentaire de séparation de l'acide fluorhydrique HF effectuée dans un condenseur.

Par ailleurs, il est supposé dans ce document que le difluorure d'uranyle UO₂F₂ produit dans le premier réacteur par hydrolyse n'est pas sous forme hydratée UO₂F₂ (H₂O), ce qui n'est pas toujours le cas et implique donc une limitation pratique.

En outre, la colonne de distillation nécessite à la fois une entrée pour le premier mélange gazeux et une entrée pour le deuxième mélange gazeux. Ceci rend délicat le contrôle de la colonne de distillation qui est sensible aux concentrations d'eau entrante et sortante. Or, les concentrations en sortie du réacteur d'hydrolyse et en amont de la colonne de distillation peuvent varier fortement, notamment du fait de l'hydratation variable du difluorure d'uranyle solide UO₂F₂ produit. Cela complique la conduite de l'étape de distillation, ce qui n'est pas recommandé pour un système évoluant en milieu nucléaire pour lequel la sécurité est primordiale.

Enfin, comme mentionné dans ce document, l'étape de distillation ne permet pas de récupérer aisément l'acide fluorhydrique HF sous forme anhydre. Une partie importante de cet acide est en effet perdue dans le mélange azéotropique eau/acide fluorhydrique HF obtenu après distillation. Un volume important du mélange azéotropique doit dès lors subir une étape supplémentaire de vaporisation, puis être recyclé après ajout d'eau dans le premier réacteur, ce qui complique encore plus le procédé.

L'étape de distillation est donc peu efficace en vue de récupérer au mieux de l'acide fluorhydrique HF anhydre.

### EXPOSE DE L'INVENTION

Un des buts de l'invention est donc d'éviter ou d'atténuer un ou plusieurs des inconvénients décrits ci-dessus, en proposant une méthode de production conjointe de difluorure d'uranyle UO₂F₂ et d'acide fluorhydrique HF afin de récupérer cet acide sous forme anhydre avec un rendement amélioré, de manière économique, robuste et/ou sûre.

La présente invention concerne ainsi une méthode de production de difluorure d'uranyle UO₂F₂ et d'acide fluorhydrique HF anhydre, la méthode comprenant les étapes successives suivantes :
- i) réalisation dans un réacteur d'une réaction d'hydrolyse dans laquelle un mélange gazeux initial comprenant de l'hexafluorure d'uranium UF₆ et de l'eau en excès molaire réagit en phase gazeuse afin d'obtenir du difluorure d'uranyle UO₂F₂ sous forme solide et un mélange gazeux réactionnel comprenant de l'acide fluorhydrique HF réactionnel et de l'eau réactionnelle ;
- ii) condensation du mélange gazeux réactionnel dans un premier condenseur afin d'obtenir un mélange liquide réactionnel et un premier effluent gazeux ;
- iii) établissement dans un ballon de détente d'une concentration molaire de 65 % à moins de 100 % d'acide fluorhydrique HF réactionnel dans le mélange liquide réactionnel ; puis,
- iv) séparation dans le ballon de détente du mélange liquide réactionnel, en d'une part un mélange liquide résiduel contenant de l'eau résiduelle et de l'acide fluorhydrique HF résiduel, et d'autre part en un produit gazeux contenant l'acide fluorhydrique HF anhydre.

Un des points essentiels de la méthode de production de l'invention est l'établissement d'une concentration molaire surazéotropique de 65 % à moins de 100 % d'acide fluorhydrique HF réactionnel dans le mélange liquide réactionnel, combiné à l'utilisation d'un ballon de détente afin d'en extraire l'acide fluorhydrique HF anhydre sous forme d'un produit gazeux. Grâce à la combinaison inédite de ces deux caractéristiques, la méthode et l'installation de l'invention produisent avantageusement du difluorure d'uranyle UO₂F₂ avec un très bon rendement, de l'acide fluorhydrique HF anhydre avec un faible coût énergétique. De plus, elles sont peu sensibles aux variations des divers paramètres de mise en oeuvre et offrent la possibilité d'une synergie avec la production de dioxyde d'uranium UO₂ ou de l'octaoxyde de triuranium U₃O₈ par pyrohydrolyse du difluorure d'uranyle UO₂F₂.

### EXPOSE DETAILLE DE L'INVENTION

Dans la présente description de l'invention, un verbe tel que « comprendre », « incorporer », « inclure » et ses formes conjuguées sont des termes ouverts et n'excluent donc pas la présence d'élément(s) et/ou étape(s) additionnels s'ajoutant aux élément(s) et/ou étape(s) initiaux énoncés après ces termes. Toutefois, ces termes ouverts visent en outre un mode de réalisation particulier dans lequel seul(s) le (s) élément(s) et/ou étape(s) initiaux, à l'exclusion de tout autre, sont visés ; auquel cas le terme ouvert vise en outre le terme fermé « consister en », « constituer de » et ses formes conjuguées.

Tout signe de référence entre parenthèses dans les revendications ne saurait être interprété comme limitatif de la portée de l'invention.

Par ailleurs, sauf indication contraire, les valeurs aux bornes sont incluses dans les gammes de paramètres indiquées et les températures indiquées sont considérées pour une mise en oeuvre à pression atmosphérique.

L'invention est décrite en détail dans la suite de la description.

De manière synthétique, la méthode de production de l'invention comprend les étapes successives suivantes :
- i) réalisation dans un réacteur d'une réaction d'hydrolyse de l'hexafluorure d'uranium UF₆ ;
- ii) condensation du mélange gazeux réactionnel obtenu afin d'obtenir un mélange liquide réactionnel ;
- iii) établissement dans un ballon de détente d'une concentration molaire de 65 % à moins de 100 % d'acide fluorhydrique HF réactionnel dans le mélange liquide réactionnel ; puis
- iv) extraction dans le ballon de détente de l'acide fluorhydrique HF anhydre sous forme d'un produit gazeux.

Lors de l'étape i), on réalise dans un réacteur une réaction d'hydrolyse dans laquelle un mélange gazeux initial comprenant de l'hexafluorure d'uranium UF₆ et de l'eau en excès molaire réagit en phase gazeuse afin d'obtenir du difluorure d'uranyle UO₂F₂ sous forme solide et un mélange gazeux réactionnel comprenant de l'acide fluorhydrique HF réactionnel et de l'eau réactionnelle. Cette réaction d'hydrolyse se déroule donc conformément à la réaction suivante, qui est simplifiée car elle ne tient pas compte du degré d'hydratation éventuel du difluorure d'uranyle UO₂F₂ :

(3) UF₆ (g) + (2+x) H₂O (g) -> UO₂F₂ (s) + 4 HF(g) + y H₂O (g)

Le milieu gazeux initial comprend un excès molaire d'eau vis-à-vis de l'hexafluorure d'uranium UF₆. Cet excès favorise l'hydrolyse totale de l'hexafluorure d'uranium UF₆.

L'excès molaire d'eau peut s'exprimer sous forme d'un rapport entre le nombre de moles d'eau contenues dans le milieu gazeux initial et le nombre de moles d'hexafluorure d'uranium UF₆. Il est supérieur au rapport stoechiométrique qui est égal à 2 entre ces deux espèces chimiques, de telle sorte que l'excès molaire est égal à (2 + x). Sa valeur au départ de la réaction d'hydrolyse est par exemple comprise entre 3,3 et 6, plus particulièrement entre 3,8 et 5. Un excès molaire d'eau de valeur supérieure à 6 peut être moins favorable au fonctionnement de la méthode de production de l'invention, car il nécessite alors une dépense énergétique plus élevée.

En l'absence d'hexafluorure d'uranium UF₆ résiduel, l'excédent « x » d'eau ne peut plus réagir avec cette espèce chimique. À l'issue de la réaction d'hydrolyse, une partie de cet excédent est généralement liée au difluorure d'uranyle UO₂F₂ sous forme de molécules d'hydratation. L'autre partie éventuellement restante est alors sous forme d'eau libre selon un rapport molaire « y » vis-à-vis de l'hexafluorure d'uranium UF₆ initialement présent, ce rapport étant généralement compris entre 0,5 et 3, plus particulièrement entre 0,8 et 2.

La valeur moyenne du degré d'hydratation du difluorure d'uranyle UO₂F₂ peut être mesurée à l'aide du rapport entre le nombre de moles de difluorure d'uranyle UO₂F₂ et le nombre de moles de molécules d'eau d'hydratation.

Elle est généralement d'environ 1. Dans un tel cas de figure, l'excès molaire d'eau (2 + x) est dès lors choisi le plus souvent supérieur ou égal à 3, par exemple compris entre 3,5 et 5, afin de s'assurer que la réaction d'hydrolyse est complète tout en minimisant la quantité « y » d'eau libre restante.

Le mélange gazeux initial peut également comprendre un gaz inerte chimiquement vis-à-vis des espèces chimiques présentes lors de la réaction d'hydrolyse. Le gaz inerte chimiquement joue le rôle de gaz porteur. Il peut être choisi parmi l'azote, l'argon ou leur mélange.

À l'issue de l'étape i), le difluorure d'uranyle UO₂F₂, éventuellement sous forme hydratée, et le mélange gazeux réactionnel sont obtenus dans le réacteur d'hydrolyse.

Le difluorure d'uranyle UO₂F₂ peut être sous forme de poudre.

Il peut être directement exploité en parallèle à l'étape i), en réalisant par exemple dans un four sa pyrohydrolyse en présence d'eau et/ou d'hydrogène afin d'obtenir de l'octaoxyde de triuranium U₃O₈, voire du dioxyde d'uranium UO₂ en présence d'hydrogène en quantité plus importante.

Lors de l'étape ii), on condense le mélange gazeux réactionnel dans un premier condenseur afin d'obtenir un mélange liquide réactionnel et un premier effluent gazeux.

La condensation du mélange gazeux réactionnel dans le premier condenseur peut être réalisée à une température comprise entre -10 °C et 35 °C, voire entre 0 °C et 15 °C.

Après condensation, le mélange liquide réactionnel contient l'acide fluorhydrique HF réactionnel et de l'eau réactionnelle sous forme liquide.

Le premier effluent gazeux contient le ou les gaz qui sont plus volatils que l'eau et l'acide fluorhydrique HF, tels que par exemple le gaz inerte chimiquement ou l'hydrogène pouvant résulter d'une réaction de pyrohydrolyse comme détaillée ci-après.

Lors de l'étape iii), après l'introduction du mélange liquide réactionnel dans un ballon de détente, on établit une concentration molaire de 65 % à moins de 100 % d'acide fluorhydrique HF réactionnel dans le mélange liquide réactionnel, préférentiellement de plus de 70 % et moins de 92 %.

La concentration molaire dans le mélange liquide réactionnel peut être ajustée dans le ballon de détente par différents moyens. L'homme du métier peut par exemple établir cette concentration molaire en contrôlant le niveau du mélange liquide réactionnel dans le ballon de détente ou le débit selon lequel le mélange liquide résiduel est extrait du ballon de détente, puis en ajustant la température du mélange liquide réactionnel dans le ballon de détente.

Afin d'obtenir une concentration surazéotropique la plus stable possible, l'établissement de la concentration molaire est de préférence réalisé en régulant la pression et/ou la température du mélange liquide réactionnel dans le ballon de détente. Par exemple, afin de faciliter la conduite de la méthode de production de l'invention, cette régulation est effectuée à une pression de 0,2 bar à 10 bars et une température de 0 °C à 150 °C, préférentiellement de 0,3 bar à 3 bars et de 40 °C à 85 °C, encore plus préférentiellement de 0,5 bar à 1,5 bar et de 40 °C à 85 °C.

Le ballon de détente, appelé également ballon de détente flash ou « flash drum » selon l'expression anglaise, est généralement utilisé en pétrochimie pour la reformation catalytique. Il réalise la vaporisation rapide d'une partie d'un liquide (dite vaporisation « flash »), puis sépare la phase gazeuse résultant de la pression de vapeur générée par la phase liquide correspondante avec laquelle il est en équilibre.

Si nécessaire, un premier réservoir tampon peut être placé entre le premier condenseur et le ballon de détente, afin de stocker le mélange liquide réactionnel.

De manière avantageuse, l'invention utilise un mélange comprenant de l'eau et de l'acide fluorhydrique HF selon une concentration surazéotropique. Au sens de l'invention, le terme « surazéotropique » désigne une concentration molaire de 65 % à moins de 100 % d'acide fluorhydrique HF par rapport au mélange H₂O/HF, le complément étant constitué par l'eau. Le respect d'une concentration molaire surazéotropique n'exclut toutefois pas la présence d'au moins une autre espèce chimique dans le mélange H₂O/HF.

L'utilisation d'un mélange liquide réactionnel de concentration surazéotropique met à profit la particularité du mélange H₂O/HF qui est que la phase gazeuse avec laquelle il est en équilibre est composée d'acide fluorhydrique HF anhydre.

Cette particularité propre au mélange H₂O/HF est exploitée dans l'étape iv) réalisée dans le ballon de détente. Dans cette étape, on sépare le mélange liquide réactionnel, en d'une part un mélange liquide résiduel contenant de l'eau résiduelle et de l'acide fluorhydrique HF résiduel, et d'autre part en un produit gazeux contenant l'acide fluorhydrique HF anhydre. Avantageusement, l'extraction de l'acide fluorhydrique HF anhydre du mélange surazéotropique H₂O/HF présente un faible coût énergétique de par l'utilisation d'un ballon de détente, car elle ne nécessite généralement que la vaporisation de l'acide fluorhydrique HF anhydre.

Au sens de l'invention, on entend désigner par « acide fluorhydrique HF anhydre », un acide fluorhydrique HF substantiellement anhydre ou dans lequel l'eau a été exclue autant que possible. Ainsi, l'acide fluorhydrique HF anhydre peut comprendre moins de 3 % molaire d'eau, préférentiellement moins de 2 %, encore plus préférentiellement moins de 0,5 %.

Si nécessaire, le produit gazeux peut néanmoins être soumis à une condensation partielle dans un deuxième condenseur afin de diminuer la concentration molaire en eau réactionnelle qui est extraite sous forme liquide. Cette extraction accentue le caractère anhydre de l'acide fluorhydrique HF anhydre qui reste quant à lui sous forme gazeuse. L'eau réactionnelle peut alors avantageusement être réintroduite dans la méthode de production de l'invention, par exemple dans le réacteur d'hydrolyse.

La méthode de production de l'invention peut éventuellement être intégrée dans un cycle qui va au-delà de la production du difluorure d'uranyle UO₂F₂ et de l'acide fluorhydrique HF anhydre.

Le mélange liquide résiduel correspondant à la phase liquide obtenue en sortie du ballon de détente peut ainsi être recyclé, afin par exemple d'utiliser l'eau qu'il contient dans le réacteur d'hydrolyse.

Préférentiellement, on réalise donc la combinaison, par exemple dans un mélangeur, du mélange liquide résiduel avec une eau additionnelle, afin d'obtenir un mélange liquide recyclé.

Au moins une partie de l'eau additionnelle peut provenir d'une réaction de pyrohydrolyse du difluorure d'uranyle UO₂F₂ en présence d'hydrogène et d'eau réalisée dans un four afin d'obtenir de l'octaoxyde de triuranium U₃O₈ et/ou du dioxyde d'uranium UO₂, selon les réactions simplifiées suivantes :

(4) UO₂F₂ + H₂O ⇄ UO₃ + 2 HF

(5) UO₃ -> 1/3 U₃O₈ + 1/6 02

(6) 1/3 U₃O₈ + 2/3 H₂ → UO₂+ 2/3 H₂O

(7) 1/6 O₂ + 1/3 H₂ (g) → 1/3 H₂O (g)

De par cette origine, l'eau additionnelle peut en outre comprendre de l'acide fluorhydrique HF additionnel et/ou un gaz additionnel obtenus à l'issue de la réaction de pyrohydrolyse, dans laquelle le gaz additionnel peut être l'hydrogène, l'azote ou leur mélange.

Le mélange liquide recyclé obtenu par la combinaison précitée peut être dégazé dans le mélangeur afin d'en extraire un second effluent gazeux, pouvant notamment comprendre le gaz additionnel.

Afin d'être exploité sous forme gazeuse dans le réacteur d'hydrolyse, le mélange liquide recyclé peut être vaporisé dans un évaporateur afin d'obtenir un mélange gazeux recyclé. À cet effet, le mélange liquide recyclé est par exemple vaporisé dans l'évaporateur à une température comprise entre 40 °C et 150 °C et une pression comprise entre 1 bar et 5 bars.

Afin de faciliter la conduite de l'étape de recyclage, un second réservoir tampon peut être placé entre le mélangeur et un évaporateur, afin de stocker le mélange liquide recyclé.

Dans une dernière étape, le mélange gazeux recyclé est introduit dans le réacteur afin que l'eau recyclée qu'il contient entre dans la composition de tout ou partie de l'eau en excès molaire du mélange gazeux initial.

De par la possibilité d'exécuter la méthode de production de l'invention selon plusieurs modes de réalisation particuliers, l'installation selon l'invention comprend à son tour plusieurs caractéristiques optionnelles.

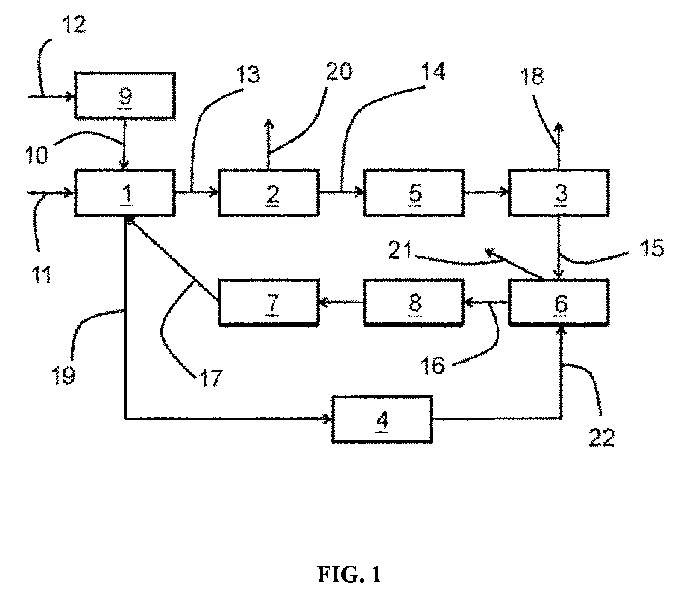

D'autres objets, caractéristiques et avantages de l'invention vont maintenant être précisés dans la description qui suit de modes de réalisation particuliers de la méthode de production de l'invention, donnés à titre illustratif et non limitatif, en référence à la Figure 1 annexée.

### BREVE DESCRIPTION DES FIGURES

La Figure 1 représente un schéma fonctionnel de la méthode de production selon l'invention visant à produire de l'acide fluorhydrique HF et du difluorure d'uranyle UO₂F₂. Elle fait notamment apparaître les différentes unités fonctionnelles pouvant être mises en oeuvre dans l'installation de l'invention, ainsi que les flux de matière entre ces différentes unités. Dans la pratique, ces flux peuvent être remplacés par des conduites reliant les unités fonctionnelles.

### EXPOSE DE MODES DE REALISATION PARTICULIERS

### 1. Mise en oeuvre de la méthode de l'invention avec ou sans intégration dans un cycle.

Les principales unités fonctionnelles de l'installation selon l'invention sont un réacteur 1, un premier condenseur 2 et un ballon 3 de détente. Elles vont être décrites dans le cadre de la mise en oeuvre des diverses étapes de la méthode de production de l'invention.

### 1.1. Réaction d'hydrolyse.

La première étape de la méthode de production de l'invention est réalisée dans le réacteur 1.

Elle consiste à réaliser la réaction d'hydrolyse d'un mélange gazeux initial comprenant de l'hexafluorure d'uranium UF₆ et de l'eau en excès molaire, ces espèces chimiques étant introduites dans le réacteur 1 respectivement par les flux 10 et 11. Comme précisé ci-après, le flux 11 contenant de l'eau en excès molaire est éventuellement remplacé ou complété par un flux 17 d'un mélange gazeux recyclé contenant de l'eau.

L'eau est en excès molaire afin de convertir la totalité de l'hexafluorure d'uranium UF₆, en tenant compte le cas échéant de l'eau contenue dans le difluorure d'uranyle UO₂F₂ formé lorsque celui-ci est hydraté.

L'hexafluorure d'uranium UF₆ étant solide à température ambiante, il peut être introduit au préalable par le flux 12 dans un évaporateur 9 afin d'être vaporisé à une température minimale de 65 °C. L'hexafluorure d'uranium UF₆ sous forme gazeuse peut alors être introduit dans le réacteur 1 d'hydrolyse par le flux 10. Le cas échéant, il peut être mélangé à un gaz inerte chimiquement qui n'est pas transformé lors de la réaction d'hydrolyse.

Le réacteur 1 est généralement opéré à une température comprise entre 200 °C et 450 °C, préférentiellement entre 220 °C et 400 °C, et à une pression comprise entre 1 bar et 5 bars. Au-delà de cette température, le difluorure d'uranyle UO₂F₂ est susceptible de se décomposer partiellement et de former d'autres impuretés compliquant son utilisation ultérieure.

Après réaction en phase gazeuse, le mélange gazeux initial produit du difluorure d'uranyle UO₂F₂ sous forme solide et d'un mélange gazeux dit réactionnel. Le terme « réactionnel » vise dans la présente description à désigner une espèce chimique issue de la réaction d'hydrolyse.

En fonction des conditions opératoires du réacteur 1 d'hydrolyse, le difluorure d'uranyle UO₂F₂ solide peut avoir un degré moyen d'hydratation qui est variable et généralement compris entre 0 et 2.

Le difluorure d'uranyle UO₂F₂, éventuellement hydraté, se dépose au fond du réacteur 1. Il en est extrait par le flux 19, par exemple à l'aide d'une vis sans fin. Il peut alors être introduit dans un four 4 de pyrohydrolyse en présence d'eau et/ou d'hydrogène afin de produire du dioxyde d'uranium UO₂ ou de l'octaoxyde de triuranium U₃O₈.

Le mélange gazeux réactionnel est quant à lui extrait du réacteur 1 par le flux 13. Il contient de l'acide fluorhydrique HF réactionnel et de l'eau réactionnelle.

### 1.2. Condensation du mélange gazeux réactionnel.

Le flux 13 contenant le mélange gazeux réactionnel est dirigé dans le premier condenseur 2.

La condensation du mélange gazeux réactionnel dans le premier condenseur 2 permet d'obtenir un mélange liquide réactionnel et un premier effluent gazeux, qui sont respectivement extraits du premier condenseur 2 par les flux 14 et 20.

Si nécessaire, le mélange liquide réactionnel peut être stocké en attente dans un premier réservoir tampon 5.

Le premier effluent gazeux contient le gaz inerte chimiquement, et de manière générale tout gaz ne participant pas à la réaction d'hydrolyse, par exemple l'hydrogène si celui-ci est présent dans le réacteur 1 d'hydrolyse. Un tel gaz est ainsi évacué de l'installation pour être éventuellement recyclé.

### 1.3. Établissement d'une concentration surazéotropique et obtention d'acide fluorhydrique HF anhydre.

Après un éventuel séjour dans le premier réservoir tampon 5, le flux 14 est introduit dans un ballon 3 de détente.

On établit ensuite dans le ballon 3 de détente une concentration molaire dite « surazéotropique », à savoir de 65 % à moins de 100 % d'acide fluorhydrique HF réactionnel, le reste étant constitué par de l'eau réactionnelle.

La concentration molaire est ajustée en régulant la pression et/ou la température du mélange liquide réactionnel au sein du ballon 3 de détente. Par exemple, l'établissement de la concentration molaire est réalisé à 50 °C et à 0,95 bar.

Afin de mesurer la concentration molaire d'acide fluorhydrique HF réactionnel, le ballon 3 de détente peut comprendre des moyens adaptés, par exemple un conductimètre ou un spectromètre infrarouge.

Si la condition de concentration surazéotropique est respectée au sein du ballon 3 de détente, le mélange liquide réactionnel se sépare en une phase liquide et une phase gazeuse. Chacune de ces phases est extraite du ballon 3 de détente, respectivement, par les flux 15 et 18.

La phase liquide est composée d'un mélange liquide résiduel contenant de l'eau résiduelle et de l'acide fluorhydrique HF résiduel selon une concentration se situant également dans la gamme de concentration surazéotropique.

La phase gazeuse en sortie du ballon 3 de détente est quant à elle composée d'un produit gazeux contenant l'acide fluorhydrique HF anhydre.

L'acide fluorhydrique HF contenu dans le produit gazeux est anhydre : il contient le plus souvent moins de 1 % molaire d'eau réactionnelle qui n'aurait pas été éliminée sous forme d'eau résiduelle dans le ballon 3 de détente.

Le cas échéant, ce caractère anhydre peut être renforcé en soumettant le produit gazeux à une condensation partielle dans un deuxième condenseur non illustré sur la Figure 1. La concentration molaire en eau réactionnelle diminue alors d'autant plus dans l'acide fluorhydrique HF anhydre. L'eau réactionnelle ainsi obtenue sera néanmoins en quantité peu importante, du fait que le produit gazeux est le plus souvent anhydre à au moins 99 %. Le cas échéant, elle peut néanmoins être réintroduite dans l'installation, par exemple au niveau du réacteur 1 d'hydrolyse.

### 1.4. Recyclage et intégration dans un cycle.

Avantageusement, la méthode de production de l'invention peut éventuellement être intégrée dans un cycle qui va au-delà de la seule production du difluorure d'uranyle UO₂F₂ dans le réacteur 1 et de l'acide fluorhydrique HF anhydre en sortie du ballon 3 de détente.

Selon une variante préférentielle de la méthode de production de l'invention, on recycle ainsi le mélange liquide résiduel dans le réacteur 1.

À cet effet, on peut combiner le mélange liquide résiduel contenu dans le flux 15 pour le recycler avec une eau additionnelle contenue dans un flux 22, afin d'obtenir un mélange liquide recyclé.

Cette combinaison est par exemple réalisée dans un mélangeur 6 dans lequel les flux 15 et 22 sont introduits. Elle peut être effectuée à température et pression ambiantes, par exemple entre 20 °C et 40 °C et entre 1 bar et 2 bars.

Au moins une partie de l'eau additionnelle contenue dans le flux 22 peut provenir de la réaction de pyrohydrolyse du difluorure d'uranyle UO₂F₂ en présence d'hydrogène et d'eau, réalisée préalablement dans le four 4 de pyrohydrolyse, par exemple un four rotatif classiquement utilisé à cet effet. Dans ce cas, l'eau additionnelle contenue dans le flux 22 est déjà sous forme gazeuse.

L'eau additionnelle peut comprendre en outre différentes espèces chimiques obtenues à l'issue de la réaction de pyrohydrolyse du difluorure d'uranyle UO₂F₂. Ces espèces chimiques sont par exemple de l'acide fluorhydrique HF additionnel et le cas échéant un gaz additionnel tel que l'hydrogène, ou un gaz inerte chimiquement tel que par exemple l'azote.

Ce mode de réalisation de l'invention permet une synergie particulièrement intéressante, puisque le difluorure d'uranyle UO₂F₂ obtenu par la réaction d'hydrolyse constitue le produit de départ de la réaction de pyrohydrolyse. Cette seconde réaction produit à son tour de l'eau pouvant être intégrée sous forme d'eau additionnelle et donc de produit de départ dans la réaction d'hydrolyse. Préférentiellement, la réaction de pyrohydrolyse est donc effectuée dans la continuité de la réaction d'hydrolyse.

On peut souhaiter l'absence du gaz additionnel dans le mélange liquide recyclé qui est alors dégazé dans le mélangeur 6. Le second effluent gazeux obtenu est alors extrait du mélangeur 6 par le flux 21.

Le mélange liquide recyclé contient, avec ou sans dégazage, de l'eau dite recyclée qui résulte de la combinaison de l'eau résiduelle et de l'eau additionnelle. Il est extrait du mélangeur 6 par le flux 16. Cette eau recyclée est destinée à être introduite dans le réacteur 1 d'hydrolyse.

Avant d'être introduit dans le réacteur 1 d'hydrolyse, le mélange liquide recyclé peut être stocké dans un second réservoir tampon 8 placé entre le mélangeur 6 et un évaporateur 7, afin de gérer avec souplesse les différents flux de matière.

Il doit ensuite être mis sous forme gazeuse. À cet effet, le mélange liquide recyclé est introduit dans un évaporateur 7 par le flux 16, avant séjour éventuel dans le réservoir tampon 8, pour y être vaporisé afin d'obtenir un mélange gazeux recyclé. Cette vaporisation est par exemple réalisée à une température comprise entre 40 °C et 150 °C et une pression comprise entre 1 bar et 5 bars.

Le mélange gazeux recyclé est ensuite introduit dans le réacteur 1 par le flux 17 afin que l'eau recyclée qu'il contient entre dans la composition de tout ou partie de l'eau en excès molaire destinée à réagir dans le réacteur 1 d'hydrolyse. En absence de dégazage préalablement effectué dans le mélangeur 6, le gaz additionnel introduit dans le réacteur 1 lors d'un nouveau cycle peut encore être éliminé dans le premier condenseur 2 avec le premier effluent gazeux via le flux 20.

Afin de contrôler au mieux la méthode de production de l'invention, une mesure des concentrations en acide fluorhydrique HF des solutions stockées dans les réservoirs tampon 5 ou 8 peut être effectuée. Elle peut notamment être faite par conductimétrie ou spectrométrie infrarouge. Les températures de stockage recommandées sont comprises entre 10 °C et 30 °C.

Un autre avantage de la méthode de production et de l'installation de l'invention est la très bonne stabilité de fonctionnement malgré des fluctuations potentielles du réacteur 1, du degré d'hydratation du difluorure d'uranyle UO₂F₂ produit, ou de la composition des flux d'entrée. Ceci est détaillé dans les exemples qui suivent.

### 2. Mise en évidence de la faible dépendance de la méthode de production aux variations de divers paramètres opératoires.

La méthode de production de l'invention est mise en oeuvre dans les exemples qui suivent à l'aide de l'installation illustrée par la Figure 1.

Un exemple est également réalisé à titre comparatif afin de souligner l'avantage que représente l'utilisation conjointe d'un mélange réactionnel de concentration surazéotropique et d'un ballon de détente.

La température et la pression de chaque unité fonctionnelle sont fixées comme indiqué dans le Tableau 1. En absence d'indication contraire, la pression est de 1 bar.

**Tableau 1**

| | **Température** | **Pression** |
|---|---|---|
| **Réacteur 1** | 270 °C +/- 50 °C | 1,5 bar |
| **Condenseur 2** | 0 °C | 1,5 bar |
| **Ballon 3 de détente** | 50 °C | 0,95 bar |
| **Mélangeur 6** | 25 °C | 0,95 bar |
| **Evaporateur 7** | 115 °C | 1,5 bar |

Les débits des flux de matière entrants et sortants entre chaque unité fonctionnelle sont contrôlés, afin notamment de limiter les variations de liquide stocké dans les réservoirs tampon 5 ou 8.

Le rapport molaire entre les différents réactifs contenus dans le réacteur 1 est ajusté par la variation du débit d'hexafluorure d'uranium UF₆ en entrée.

Pour chaque exemple de réalisation, un tableau indique les débits en moles/heure des différentes espèces chimiques mesurées pour les flux d'entrée ou de sortie de chaque unité fonctionnelle. Ils sont représentatifs des rapports molaires entre les différentes espèces chimiques, car l'installation est opérée en régime stationnaire et donc à débit constant.

Les colonnes de chaque tableau correspondent ainsi à :
- colonne 10 : flux 10 contenant l'hexafluorure d'uranium UF₆ à introduire dans le réacteur 1 ;
- colonne 22 : flux 22 contenant l'eau additionnelle à introduire dans le mélangeur 6 ;
- colonne 13 : flux 13 contenant le mélange gazeux réactionnel à introduire dans le premier condenseur 2 ;
- colonne 18 : flux 18 contenant le produit gazeux extrait du ballon 3 de détente ;
- colonne 15 : flux 15 contenant le mélange liquide résiduel extrait du ballon 3 de détente ;
- colonne 21 : flux 21 contenant le second effluent gazeux extrait du mélangeur 6 ;
- colonne 20 : flux 20 contenant le premier effluent gazeux extrait du premier condenseur 2 ;
- colonne 19 : flux 19 contenant le difluorure d'uranyle UO₂F₂ extrait du réacteur 1.

En fonction des conditions opératoires, le difluorure d'uranyle UO₂F₂ solide obtenu dans le réacteur 1 d'hydrolyse peut avoir un degré d'hydratation variable. Toutefois, sur la base de prélèvements effectués dans un réacteur d'hydrolyse expérimental opéré à une température de 270 °C, le degré d'hydratation moyen est considéré comme étant égal à 1, avec une tolérance sur cette valeur pouvant varier jusqu'à 10 %, voire 20 %. Le difluorure d'uranyle UO₂F₂ est donc noté sous la forme UO₂F₂ (H_{2O}).

Le degré d'hydratation du difluorure d'uranyle UO₂F₂ est néanmoins augmenté à 1,2 dans un des exemples de réalisation afin de montrer la robustesse de la méthode de production de l'invention par rapport à cette variable expérimentale.

Comme détaillé ci-après, ces divers exemples montrent la robustesse de la méthode de production de l'invention malgré la variation de paramètres tels que la présence d'une quantité plus ou moins significative d'acide fluorhydrique HF dans le mélange gazeux initial, le degré d'hydratation du difluorure d'uranyle UO₂F₂ ou une variation de la pression du ballon 3 de détente.

Ils soulignent en particulier l'obtention de difluorure d'uranyle UO₂F₂ (flux 19) selon un rendement proche de 100 % et d'acide fluorhydrique HF anhydre (flux 18) ne contenant le plus souvent que des traces d'eau.

### 2.1. Exemple de référence.

Cet exemple sert de référence aux exemples suivants.

La réaction d'hydrolyse est effectuée dans le réacteur 1 en présence d'hexafluorure d'uranium UF₆, d'eau et d'azote en tant que gaz inerte chimiquement.

Les débits molaires pour les apports de matière sont les suivants :
- 1,00 UF₆ / 0,15 N₂ via le flux 10 ;
- 3,00 H₂O / 0,10 N₂ via le flux 22.

L'eau provient d'eau additionnelle selon un excès molaire de 3 vis-à-vis de l'hexafluorure d'uranium UF₆. Elle est introduite dans l'installation par le flux d'entrée 22 avec l'azote, et se retrouve en partie sous forme d'eau résiduelle dans le flux 15 une fois que le régime stationnaire du procédé est atteint.

L'eau recyclée résultant de la combinaison des eaux additionnelle et résiduelle est introduite dans le réacteur 1 par le flux 17.

**Tableau 2**

| | 10 | 22 | 13 | 18 | 15 | 21 | 20 | 19 |
|---|---|---|---|---|---|---|---|---|
| UF₆ | 1,00 | 0,00 | 0,00 | 0,00 | 0,00 | 0,00 | 0,00 | 0,00 |
| HF | 0,00 | 0,00 | 6,96 | 3, 98 | 2, 97 | 0,01 | 0,01 | 0,00 |
| H₂O | 0,00 | 3,00 | 1,00 | 0,01 | 0, 99 | 0,00 | 0,00 | 0,00 |
| UO₂F₂(H₂O) | 0,00 | 0,00 | 0,00 | 0,00 | 0,00 | 0,00 | 0,00 | 1,00 |
| N₂ (g) | 0,15 | 0,10 | 0,15 | 0,00 | 0,00 | 0,10 | 0,15 | 0,00 |

### 2.2. Eau additionnelle comprenant de l'acide fluorhydrique HF peu concentré.

Cet exemple diffère du précédent en ce que l'eau additionnelle comprend en outre de l'acide fluorhydrique HF. Les débits molaires pour les apports de matière sont les suivants :
- 1,00 UF₆ / 0,10 N₂ via le flux 10 ;
- 3,00 H₂O / 3 HF / 0,15 N₂ via le flux 22 qui vise à reproduire un flux en provenance d'un réacteur de pyrohydrolyse de difluorure d'uranyle UO₂F₂ de par la présence de l'acide fluorhydrique HF.

**Tableau 3**

| | 10 | 22 | 13 | 18 | 15 | 21 | 20 | 19 |
|---|---|---|---|---|---|---|---|---|
| UF₆ | 1,00 | 0,00 | 0,00 | 0,00 | 0,00 | 0,00 | 0,00 | 0,00 |
| HF | 0,00 | 3,00 | 9, 96 | 6, 98 | 2, 97 | 0,01 | 0,01 | 0,00 |
| H₂O | 0,00 | 3,00 | 1,00 | 0,01 | 0, 99 | 0,00 | 0,00 | 0,00 |
| UO₂F₂(H₂O) | 0,00 | 0,00 | 0,00 | 0,00 | 0,00 | 0,00 | 0,00 | 1,00 |
| N₂ (g) | 0,10 | 0,15 | 0,10 | 0,00 | 0,00 | 0,15 | 0,10 | 0,00 |

### 2.3. Eau additionnelle comprenant de l'acide fluorhydrique HF concentré.

Cet exemple diffère des précédents en ce que l'acide fluorhydrique HF est plus concentré dans le flux 22 d'entrée, à savoir qu'il provient d'une solution de concentration 75 % molaire issue par exemple d'un stock d'acide concentré.

Les débits molaires pour les apports de matière sont les suivants :
- 0,32 UF₆ / 0,06 N₂ via le flux 10 ;
- 1,00 H₂O / 3,00 HF / 0,20 N₂ via le flux 22.

**Tableau 4**

| | 10 | 22 | 13 | 18 | 15 | 21 | 20 | 19 |
|---|---|---|---|---|---|---|---|---|
| UF₆ | 0,32 | 0,00 | 0,00 | 0,00 | 0,00 | 0,00 | 0,00 | 0,00 |
| HF | 0,00 | 3,00 | 13,17 | 4,25 | 8,91 | 0,02 | 0,01 | 0,00 |
| H₂O | 0,00 | 1,00 | 3,00 | 0,03 | 2,97 | 0,00 | 0,00 | 0,00 |
| UO₂F₂(H₂O) | 0,00 | 0,00 | 0,00 | 0,00 | 0,00 | 0,00 | 0,00 | 0,32 |
| N₂ (g) | 0,06 | 0,2 | 0,06 | 0,00 | 0,00 | 0,2 | 0,06 | 0,00 |

### 2.4. Obtention de difluorure d'uranyle UO₂F₂ hydraté.

Cet exemple se caractérise par un abaissement de la température du réacteur 1 qui est de 235 °C au lieu de 270 °C.

Il en résulte un degré d'hydratation plus prononcé pour le difluorure d'uranyle UO₂F₂ obtenu dans le réacteur 1, à savoir un degré d'hydratation produit égal à 1,2. Chaque molécule de difluorure d'uranyle UO₂F₂ est ainsi hydratée en moyenne par 1,2 molécule d'eau.

Les débits molaires pour les apports de matière sont les suivants :
- 0,94 UF₆ / 0,094 N₂ via le flux 10 ;
- 3,00 H₂O / 3,00 HF / 0,15 N₂ via le flux 22.

**Tableau 5**

| | 10 | 22 | 13 | 18 | 15 | 21 | 20 | 19 |
|---|---|---|---|---|---|---|---|---|
| UF₆ | 0, 94 | 0,00 | 0,00 | 0,00 | 0,00 | 0,00 | 0,00 | 0,00 |
| HF | 0,00 | 3,00 | 9,71 | 6,73 | 2,97 | 0,01 | 0,01 | 0,00 |
| H₂O | 0,00 | 3,00 | 1,00 | 0,01 | 0,99 | 0,00 | 0,00 | 0,00 |
| UO₂F₂ (H₂O) ^{1,2} | 0,00 | 0,00 | 0,00 | 0,00 | 0,00 | 0,00 | 0,00 | 0,94 |
| N₂ (g) | 0,094 | 0,15 | 0,094 | 0,00 | 0,00 | 0,15 | 0,094 | 0,00 |

### 2.5. Variation de la pression de sortie.

Cet exemple diffère de l'exemple de référence par la diminution d'un facteur 2 de la pression dans le ballon 3 de détente qui est désormais égale à 0,475 bar. La température reste fixée à 50 °C.

Les débits molaires pour les apports de matière sont les suivants :
- 0,99 UF₆ / 0,15 N₂ via le flux 10 ;
- 3,00 H₂O / 3,00 HF / 0,10 N₂ via le flux 22.

**Tableau 6**

| | 10 | 22 | 13 | 18 | 15 | 21 | 20 | 19 |
|---|---|---|---|---|---|---|---|---|
| UF₆ | 0,99 | 0,00 | 0,00 | 0,00 | 0,00 | 0,00 | 0,00 | 0,00 |
| HF | 0,00 | 3,00 | 8,78 | 6,94 | 1,84 | 0,01 | 0,01 | 0,00 |
| H₂O | 0,00 | 3,00 | 1,00 | 0,03 | 0,97 | 0,00 | 0,00 | 0,00 |
| UO₂F₂ (H₂O) | 0,00 | 0,00 | 0,00 | 0,00 | 0,00 | 0,00 | 0,00 | 0,99 |
| N₂ (g) | 0,15 | 0,10 | 0,15 | 0,00 | 0,00 | 0,10 | 0,15 | 0,00 |

Le caractère anhydre de l'acide fluorhydrique HF est légèrement dégradé, mais reste très satisfaisant.

### 2.6. Exemple comparatif.

Cet exemple est un mode de réalisation non conforme à l'invention, dans lequel le mélange liquide réactionnel ne présente pas une concentration surazéotropique au sein du ballon 3 de détente.

À cet effet, la pression dans le ballon 3 de détente est établie à 0,16 bar, les autres paramètres opératoires étant conformes au Tableau 1. De telles conditions mènent à l'obtention d'un mélange liquide réactionnel dans lequel la concentration molaire d'acide fluorhydrique HF n'est que de 54 %, valeur inférieure à 65 % à partir de laquelle une concentration surazéotropique est obtenue.

Les débits molaires pour les apports de matière sont les suivants :
- 0,84 UF₆ / 0,13 N₂ via le flux 10 ;
- 3,00 H₂O / 3,00 HF / 0,10 N₂ via le flux 22.

**Tableau 7**

| | 10 | 22 | 13 | 18 | 15 | 21 | 20 | 19 |
|---|---|---|---|---|---|---|---|---|
| UF₆ | 0,84 | 0,00 | 0,00 | 0,00 | 0,00 | 0,00 | 0,00 | 0,00 |
| HF | 0,00 | 3,00 | 7,95 | 6,35 | 1, 60 | 0,01 | 0,01 | 0,00 |
| H₂O | 0,00 | 3,00 | 1,83 | 0,48 | 1,35 | 0,00 | 0,00 | 0,00 |
| UO₂F₂ (H₂O) | 0,00 | 0,00 | 0,00 | 0,00 | 0,00 | 0,00 | 0,00 | 0,84 |
| N₂ (g) | 0,13 | 0,10 | 0,13 | 0,00 | 0,00 | 0,10 | 0,13 | 0,00 |

Comme illustré par la concentration molaire de 54 % d'acide fluorhydrique HF dans le flux 15 en sortie du ballon 3 de détente, l'absence de l'établissement d'une concentration molaire surazéotropique au sein du mélange réactionnel ne permet pas d'obtenir de l'acide fluorhydrique HF anhydre : le produit gazeux du flux 18 contient 93 % d'acide fluorhydrique HF et 7 % d'eau.

Il ressort de la description qui précède que la méthode de production de l'invention produisent du difluorure d'uranyle UO₂F₂ avec un très bon rendement, de l'acide fluorhydrique HF anhydre avec un faible coût énergétique, tout en étant peu sensibles aux variations des divers paramètres de mise en oeuvre et en offrant la possibilité d'une synergie avec la production de dioxyde d'uranium UO₂ et/ou d'octaoxyde de triuranium U₃O₈ par pyrohydrolyse du difluorure d'uranyle UO₂F₂.

L'invention n'est pas limitée aux modes de réalisation décrits et illustrés à la Figure 1 annexée.

## Revendications

1. Méthode de production de difluorure d'uranyle UO₂F₂ et d'acide fluorhydrique HF anhydre, la méthode comprenant les étapes successives suivantes :
- i) réalisation dans un réacteur (1) d'une réaction d'hydrolyse dans laquelle un mélange gazeux initial comprenant de l'hexafluorure d'uranium UF₆ et de l'eau en excès molaire réagit en phase gazeuse afin d'obtenir du difluorure d'uranyle UO₂F₂ sous forme solide et un mélange gazeux réactionnel comprenant de l'acide fluorhydrique HF réactionnel et de l'eau réactionnelle ;
- ii) condensation du mélange gazeux réactionnel dans un premier condenseur (2) afin d'obtenir un mélange liquide réactionnel et un premier effluent gazeux ;
- iii) établissement dans un ballon (3) de détente d'une concentration molaire de 65 % à moins de 100 % d'acide fluorhydrique HF réactionnel dans le mélange liquide réactionnel ; puis,
- iv) séparation dans le ballon (3) de détente du mélange liquide réactionnel, en d'une part un mélange liquide résiduel contenant de l'eau résiduelle et de l'acide fluorhydrique HF résiduel, et d'autre part en un produit gazeux contenant ledit acide fluorhydrique HF anhydre.

2. Méthode de production selon la revendication 1, dans laquelle le difluorure d'uranyle UO₂F₂ obtenu dans le réacteur (1) est sous forme hydratée.

3. Méthode de production selon la revendication 1 ou 2, dans laquelle on réalise dans un four (4) la pyrohydrolyse du difluorure d'uranyle UO₂F₂ en présence d'eau et/ou d'hydrogène afin d'obtenir de l'octaoxyde de triuranium U₃O₈ ou du dioxyde d'uranium UO₂.

4. Méthode de production selon l'une quelconque des revendications précédentes, dans laquelle un premier réservoir tampon (5) est placé entre le premier condenseur (2) et le ballon (3) de détente, afin de stocker le mélange liquide réactionnel.

5. Méthode de production selon l'une quelconque des revendications précédentes, dans laquelle l'établissement de ladite concentration molaire est réalisé en régulant la pression et/ou la température du mélange liquide réactionnel dans le ballon (3) de détente.

6. Méthode de production selon la revendication 5, dans laquelle l'établissement de ladite concentration molaire est réalisé à une pression de 0,2 bar à 10 bars et une température de 0 °C à 150 °C.

7. Méthode de production selon l'une quelconque des revendications précédentes, dans laquelle le produit gazeux est soumis à une condensation partielle dans un deuxième condenseur afin de diminuer la concentration molaire en eau réactionnelle.

8. Méthode de production selon l'une quelconque des revendications précédentes, dans laquelle on réalise dans un mélangeur (6) la combinaison du mélange liquide résiduel avec une eau additionnelle, afin d'obtenir un mélange liquide recyclé.

9. Méthode de production selon la revendication 8, dans laquelle au moins une partie de l'eau additionnelle provient d'une réaction de pyrohydrolyse du difluorure d'uranyle UO₂F₂ en présence d'hydrogène et d'eau réalisée dans un four (4) afin d'obtenir de l'octaoxyde de triuranium U₃O₈ et/ou du dioxyde d'uranium UO₂.

10. Méthode de production selon la revendication 8 ou 9, dans laquelle l'eau additionnelle comprend en outre de l'acide fluorhydrique HF additionnel et/ou un gaz additionnel.

11. Méthode de production selon la revendication 10, dans laquelle le gaz additionnel est l'hydrogène, l'azote ou leur mélange.

12. Méthode de production selon l'une quelconque des revendications 8 à 11, dans laquelle le mélange liquide recyclé est dégazé dans le mélangeur (6) afin d'en extraire un second effluent gazeux.

13. Méthode de production selon l'une quelconque des revendications 8 à 12, dans laquelle le mélange liquide recyclé est vaporisé dans un évaporateur (7) afin d'obtenir un mélange gazeux recyclé.

14. Méthode de production selon l'une quelconque des revendications 8 à 13, dans laquelle un second réservoir tampon (8) est placé entre le mélangeur (6) et un évaporateur (7), afin de stocker le mélange liquide recyclé.

15. Méthode de production selon l'une quelconque des revendications 8 à 14, dans laquelle le mélange gazeux recyclé est introduit dans le réacteur (1) afin que l'eau recyclée qu'il contient entre dans la composition de tout ou partie de l'eau en excès molaire.

## Patentansprüche

1. Herstellungsverfahren von Uranyldifluorid UO₂F₂ und wasserfreier Fluorwasserstoffsäure HF, wobei das Verfahren die folgenden aufeinanderfolgenden Schritte umfasst:
i) Durchführen in einem Reaktor (1) einer Hydrolysereaktion, bei der ein Ausgangsgasgemisch, das Uranhexafluorid UF₆ und molar überschüssiges Wasser umfasst, in der Gasphase reagiert, um Uranyldifluorid UO₂F₂ in fester Form und ein gasförmiges Reaktionsgemisch zu erhalten, das Reaktions-Fluorwasserstoffsäure HF und Reaktionswasser umfasst,
ii) Kondensieren des gasförmigen Reaktionsgemischs in einem ersten Kondensatorkühler (2), um ein flüssiges Reaktionsgemisch und ein erstes Abgas zu erhalten,
iii) Herstellen, in einem Entspannungsballon (3), einer molaren Konzentration von 65 % bei weniger als 100 % Reaktions-Fluorwasserstoffsäure HF in dem flüssigen Reaktionsgemisch, dann
iv) Trennen, in dem Entspannungsballon (3), des flüssigen Reaktionsgemischs in zum einen ein flüssiges Restgemisch, das Restwasser und restliche Fluorwasserstoffsäure HF enthält, und zum anderen in ein gasförmiges Produkt, das die wasserfreie Fluorwasserstoffsäure HF enthält.

2. Herstellungsverfahren nach Anspruch 1, wobei das in dem Reaktor (1) erhaltene Uranyldifluorid UO₂F₂ in wasserhaltiger Form ist.

3. Herstellungsverfahren nach Anspruch 1 oder 2, wobei in einem Ofen (4) die Pyrohydrolyse des Uranyldifluorids UO₂F₂ bei Anwesenheit von Wasser und/oder Wasserstoff durchgeführt wird, um Triuranoctoxid U₃O₈ oder Urandioxid UO₂ zu erhalten.

4. Herstellungsverfahren nach einem der vorangehenden Ansprüche, wobei ein erstes Pufferreservoir (5) zwischen dem ersten Kondensatorkühler (2) und dem Entspannungsballon (3) platziert ist, um das flüssige Reaktionsgemisch zu lagern.

5. Herstellungsverfahren nach einem der vorangehenden Ansprüche, wobei das Herstellen der molaren Konzentration durch Regulierung des Drucks und/oder der Temperatur des flüssigen Reaktionsgemischs im Entspannungsballon (3) erfolgt.

6. Herstellungsverfahren nach Anspruch 5, wobei das Herstellen der molaren Konzentration bei einem Druck von 0,2 bar bis 10 bar und einer Temperatur von 0 °C bis 150 °C erfolgt.

7. Herstellungsverfahren nach einem der vorangehenden Ansprüche, wobei das gasförmige Produkt eine Teilkondensation in einem zweiten Kondensatorkühler unterzogen wird, um die molare Konzentration an Reaktionswasser zu senken.

8. Herstellungsverfahren nach einem der vorangehenden Ansprüche, wobei in einem Mischer (6) die Kombination des flüssigen Restgemischs mit einem zusätzlichen Wasser durchgeführt wird, um ein flüssiges Recyclinggemisch zu erhalten.

9. Herstellungsverfahren nach Anspruch 8, wobei mindestens ein Teil des zusätzlichen Wassers von einer Pyrohydrolysereaktion des Uranyldifluorids UO₂F₂ bei Anwesenheit von Wasserstoff und Wasser herrührt, die in einem Ofen (4) durchgeführt wird, um Triuranoctoxid U₃O₈ und/oder Urandioxid UO₂ zu erhalten

10. Herstellungsverfahren nach Anspruch 8 oder 9, wobei das zusätzliche Wasser ferner zusätzliche Fluorwasserstoffsäure HF und/oder ein zusätzliches Gas umfasst.

11. Herstellungsverfahren nach Anspruch 10, wobei das zusätzliche Gas Wasserstoff, Stickstoff oder ihr Gemisch ist.

12. Herstellungsverfahren nach einem der Ansprüche 8 bis 11, wobei das flüssige Recyclinggemisch in dem Mischer (6) entgast wird, um ein zweites Abgas zu extrahieren.

13. Herstellungsverfahren nach einem der Ansprüche 8 bis 12, wobei das flüssige Recyclinggemisch in einem Verdampfer (7) verdampft wird, um ein gasförmiges Recyclinggemisch zu erhalten.

14. Herstellungsverfahren nach einem der Ansprüche 8 bis 13, wobei ein zweites Pufferreservoir (8) zwischen dem Mischer (6) und einem Verdampfer (7) platziert ist, um das flüssige Recyclinggemisch zu lagern.

15. Herstellungsverfahren nach einem der Ansprüche 8 bis 14, wobei das gasförmige Recyclinggemisch in den Reaktor (1) eingeleitet wird, damit das enthaltene recycelte Wasser in die Zusammensetzung des gesamten oder eines Teils des molar überschüssigen Wassers eintritt.

## Claims

1. A method to produce uranyl difluoride UO₂F₂ and anhydrous hydrofluoric acid HF, the method comprising the following successive steps:
i) conducting a hydrolysis reaction in a reactor (1), wherein an initial gaseous mixture comprising uranium hexafluoride UF₆ and water in molar excess reacts in gaseous phase to obtain uranyl difluoride UO₂F₂ in solid form and a reaction gaseous mixture comprising reaction hydrofluoric acid and reaction water;
ii) condensing the reaction gaseous mixture in a first condenser (2) to obtain a liquid reaction mixture and a first gaseous effluent;
iii) in a flash drum (3) obtaining a molar concentration of 65 % to less than 100 % of reaction hydrofluoric acid HF in the liquid reaction mixture; then
iv) in the flash drum (3) separating the liquid reaction mixture into a residual liquid mixture containing residual water and residual hydrofluoric acid HF, and into a gaseous product containing said anhydrous hydrofluoric acid HF.

2. The production method according to claim 1, wherein the uranyl difluoride UO₂F₂ obtained in the reactor (1) is in hydrated form.

3. The production method according to claim 1 or 2, wherein pyrohydrolysis of the uranyl difluoride UO₂F₂ in the presence of water and/or hydrogen is conducted in a furnace (4) to obtain triuranium octoxide U₃O₈ or uranium dioxide UO₂.

4. The production method according to any of the preceding claims, wherein a first buffer tank (5) is placed between the first condenser (2) and the flash drum (3) to store the liquid reaction mixture.

5. The production method according to any of the preceding claims, wherein the obtaining of said molar concentration is achieved by regulating the pressure and/or temperature of the liquid reaction mixture in the flash drum (3).

6. The production method according to claim 5, wherein the obtaining of said molar concentration is carried out at a pressure of 0.2 bar to 10 bars and at a temperature of 0 °C to 150 °C.

7. The production method according to any of the preceding claims, wherein the gaseous product is subjected to partial condensation in a second condenser to reduce the molar concentration of reaction water.

8. The production method according to any of the preceding claims, wherein the liquid residual mixture is combined with additional water in a mixer (6) to obtain a recycled liquid mixture.

9. The production method according to claim 8, wherein at least part of the additional water is derived from a pyrohydrolysis reaction of the uranyl difluoride UO₂F₂ in the presence of hydrogen and water conducted in a furnace (4) to obtain triuranium octoxide U₃O₈ and/or uranium dioxide UO₂.

10. The production method according to claim 8 or 9, wherein the additional water also comprises additional hydrofluoric acid HF and/or an additional gas.

11. The production method according to claim 10, wherein the additional gas is hydrogen, nitrogen or mixture thereof.

12. The production method according to ay of claims 8 to 11, wherein the recycled liquid mixture is degassed in the mixer (6) to extract therefrom a second gaseous effluent.

13. The production method according to any of claims 8 to 12, wherein the recycled liquid mixture is vaporised in an evaporator (7) to obtain a recycled gaseous mixture.

14. The production method according to any of claims 8 to 13, wherein a second buffer tank (8) is placed between the mixer (6) and evaporator (7) to store the recycled liquid mixture.

15. The production method according to any of claims 8 to 14, wherein the recycled gaseous mixture is added to the reactor (1) so that the recycled water contained therein enters into the composition of all or part of the water in molar excess.
